# EUROPEAN PATENT SPECIFICATION

(11) **EP 1 313 588 B1**
(45) Date of publication and mention of the grant of the patent: **14.10.2009**
(21) Application number: 01968293.9
(22) Date of filing: 30.08.2001
(51) Int. Cl.: B23K 9/20

(54) **IMPROVED ARC WELDING METHOD AND APPARATUS**
VERBESSERTES LICHTBOGENSCHWEISSVERFAHREN UND VORRICHTUNG
PROCEDE ET APPAREIL DE SOUDAGE A L'ARC AMELIORE

(30) Priority: 30.08.2000 GB 0021316
(43) Date of publication of application: 28.05.2003
(73) Proprietor: Newfrey LLC, Newark, Delaware 19711 (US)
(72) Inventor: KURZ, Roland, 25440 Linden-Leihgestern (DE); NAPIERALA, Stefan, 35043 Marburg (DE); EBERLING, Richard, L., Allenton, MI 48002 (US); HARRIES, Simon, Thatcham, Berkshire RG18 4DF (GB)
(74) Representative: Haar, Lucas Heinz Jörn
(86) International application number: PCT/US2001/027040
(87) International publication number: WO 2002/018087

(56) References cited:
- DE-A1- 2 818 896
- JP-A- 6 320 288
- JP-A- 58 110 171
- US-A- 2 549 804
- US-A- 2 727 123
- US-A- 2 790 066
- US-A- 4 306 137
- US-A- 4 306 137
- US-A- 5 349 152
- US-A- 5 349 152
- US-A- 5 938 946
- US-A- 5 938 946

## Description

The invention relates to a method of and apparatus for arc welding of a substantially metal component to a metal workpiece according to the preamble of, respectively, claim 1 and claim 14 see, for example, DE 2818896 A. More particularly, the invention relates to the welding of a metallic stud or nut to a metallic sheet on which stud or nut is to be used as an anchorage.

The welding of metallic studs and nuts to a metallic structure by means of arc welding is a widespread process found in particular application in the automotive industry. The exact method of the welding process can be relatively varied but the general principal involves the formation of an electric arc between the stud and the metal sheet effecting relative melt of the metallic materials in the region of the arc so that the metal component can then be lowered into the melt which is formed in the fusion region to result in a strong welded connection being formed between the component and the metal structure on subsequent cooling.

One form of welding process is the so called drawn arc welding process which involves positioning the component to be welded to the metal sheet within a weld gun and bringing the component into electrical contact with the metallic surface to complete an initial circuit indicating that the metal component is in contact with the metal sheet. The weld cycle is then initiated whereby the stud is withdrawn from the work surface inducing a pilot arc which serves to help clean both the component and the work surface before a main welding current is initiated creating a weld arc between the raised component and the metal sheet. The weld arc serves to form a pool of molten metal on the sheet material and also on the metallic component. The welding apparatus then causes the component to be plunged into the molten metal whereby as the weld pool solidifies it forms a homogenous joint. The entire process takes less than a second and forms a joint which in fact is stronger than material that has actually been welded. Such a drawn arc welding process is standard within the welding industry and is used to attach both studs and nuts to metal sheets which allow further fastenings to be connected thereto. In this manner studs themselves may often be threaded to receive a co-operating threaded nut or a nut itself may be welded directly onto the sheet in order to receive a screw threaded connector. Usually such studs and nuts are to enable earthing connections to be made to the sheet metal and thus require good electric contact to be made between the stud or nut and the appropriate connector element fixed thereto. However, it has been found that even with the cleaning function of the pilot arc, the intense heat generated by the arc during the welding process results in the formation of vaporised carbon and other impurities which can result in a "smoke" emanating from the molten material. Condensation of this smoke and vaporised impurity on the threads above the welded nut or stud can serve to inhibit electrical contact with the subsequent connection and impair the threaded engagement between the component and threaded connector.

A method and apparatus for welding studs to a workpiece are disclosed in US-A-4 306 137. When the studs are welded to a workpiece using the drawn-arc stud welding technique, gas is directed toward the weld area in a swirling manner around the stud where the weld occurs in order to prevent that a coating of smut is deposited on the workpiece around the welded stud end.

In US-A-5 938 946 an electric welding device for welding a fastening element having a through duct is disclosed, comprising a conveying and holding system having a guide member with a guide duct and a loading member movably arranged therein. The loading member has a duct with an inlet. A gas supply duct is closed in a first position of the loading member and is connected to the inlet in a second position of the loading member, so that gas can pass via the gas supply duct through the loading member into the through duct of the fastening element to prevent admission of the melt during the welding process into the fastening element.

A method for brazing and fusion-welding a threaded nut to a metallic plate by using a conventional arc stud device is disclosed in JP 58 110171. The method does not comprise any means for directing a fluid flow towards the brazing or welding region.

JP 06 320288 a method for welding a weld nut having projections on the end face to be welded to a base plate member having a hole positioned concentrically to the tapped hole of the weld nut. A pilot pin extends from a central hole of a fixed electrode contacting the plate member opposite to the weld nut into the tapped hole of the weld nut. Vertical grooves are formed on the periphery of the pilot pin. Air is supplied from the grooves around the tapped hole of the end face of the weld nut and spatters generated from the projections at the time of welding are scattered outside the weld nut.

A welding method according to the preamble of claim 1 and a welding apparatus according to the preamble of claim 14 are known from DE 28 18 896 A1. A weld stud having a threaded connecter region and an end forming a weld region is movably supported by a stud holder of a welding apparatus. The stud holder is surrounded by a cylindrical supply system terminating at a distance from the workpiece and supplying pressurised inert gas to the weld region. A support sleeve is spaced concentrically around the supply system and connected to a suction device for evacuating the welding region.

Furthermore, it has been found that due to the reactive forces generated by the formation of the arc itself and also by the driving of the component into the molten metal can result in the formation of splashes of molten metal whereby if such splashes land on the thread of the nut or the stud, then they again will solidify to inhibit the screw threaded operation of such nut or stud.
It is therefore an object of the present invention to provide for an improved welding process and welding apparatus to alleviate the aforementioned problems in a manner which will not inhibit the speed or quality of the welding procedure.

According to one aspect of the present invention there is provided a method of welding a substantially metal component to a metal workpiece according to claim 1. Usually the flow of pressurised fluid is initiated as least substantially simultaneously with the creation of the weld arc or before creation of the weld arc.

As the connector region is threaded, the method comprises the step of deflecting the fluid flow through a channel formed by the thread of the threaded region. In particular, where the component is a weld nut the pressurised fluid flow is directed through the central aperture of the nut to create a positive pressure within the aperture of the nut which prevent any splashes of molten weld material or gases from entering this region. The method will also preferably comprise the step of placing a solid cylindrical insert in frictional engagement with the internal threads of the nut in order to form sealed channels with the thread through which the fluid flow can then be directed. In this manner the pressurised fluid is further compressed through this threaded channel to create a high positive pressure which prevents any airborne particulate from the weld procedure from being thrown or drawn into the threaded region of the nut.

The pressurised fluid may be given a straight flow path prior to being directed through the nut. This flow path can be induced by passing the fluid through at least one longitudinally extending channel, usually formed within a solid control valve placed in the fluid path, and more usually the flow is induced by passing through six such channels, which are equally spaced angularly about the central axis of the fluid flow path.

The pressurised fluid may also be given a spiral flow path prior to being directed through the nut Thus when the fluid flow engages with the spiral threads of the nut it has already partially aligned with such threads and therefore readily engages and enters the channels formed between the threads of the nut. This spiral flow path is preferably induced by passing the fluid through at least one spiral channel, usually formed within a solid control valve placed in the fluid path, and more usually the spiral flow is induced by passing through six such channels, which are equally spaced angularly about the central axis of the fluid flow path. The spiral channels are usually set to deflect the fluid flow at an angle of between 10 and 80° relative to a plane perpendicular to the direction of fluid flow and more particularly the angle of deflection generated is between 50 and 70°.

The pressurised fluid may also be allowed to expand after the spiral flow path is induced therein. Preferably, the fluid used in this method will be compressed air directed from a pressurised air source of between 5 and 30 litres per square metre and preferably between 10 and 20 litres per square metre.

Furthermore, according to a second aspect of the present invention there is provided apparatus for directing a pressurised fluid flow over a substantially metal component during arc welding, the fluid flow being directed by said apparatus so as to deflect any airborne fluid residue created by the welding process away from the component.

According to a further aspect of the present invention there is also provided a welding apparatus for welding a substantially metal component to a metal workpiece according to claim 14.

Usually such apparatus will comprise control means for initiating fluid flow at least substantially simultaneously with or before the creation of the weld arc. Such control means will usually be by means of a computerised control station as are conventional for arc welding apparatus (both automated and hand held) whereby such control unit will detect, by means of a test voltage, when welding should occur and thereby automatically directs a weld current to the weld head to create the weld arc. Such a computerised control unit can, simultaneously or slightly prior to inducing the weld current, initiate fluid flow from the fluid source in a conventional manner such as opening a valve or any other conventional method of transmitting a pressurised fluid from a pressurised fluid source. This computerised control unit will also control displacement of the weld head and nozzle.

According to the present invention, the welding apparatus is used with a component having a threaded connector region whereby the fluid control means comprises a directing member on the outer edges of the threads so as to form a substantially sealed channel therewith and to then direct such fluid flow through this thread channel. With an externally threaded member such as a screw threaded stud such a directing member may form a tubular body which slides over the exterior surface of the stud so as to engage such threads, but in the case of a threaded nut then the outer edges of the threads are directed about the internal periphery of the internal nut aperture in which case a cylindrical body is inserted into the nut so as to engage these threads.

The fluid flow control means will usually-comprise-a substantially hollow fluid transmitting member with an end stop for substantially forming a sealed engagement with the upper surface of a weld nut so that fluid flow is directed through the central aperture of such nut. Such fluid flow will then be prevented from continued displacement through such nut where the cylindrical body has been inserted and thus is forced into the channel formed between the thread of the nut and the cylindrical body to pass therethrough. This provides the advantage of specifically directing the pressurised fluid flow through the threads of the nut and also serves to increase the pressure of the fluid through these channels thereby preventing any airborne residual particles from the weld pool from entering by the nut thread.

According to the present invention, the welding apparatus comprises a control valve disposed between the fluid source and the nut for inducing a flow path in the fluid flow. This control valve will usually comprise a solid body having at least one channel extending therethrough. The control valve will be cylindrical and may have six channels formed about its periphery so as to be equally spaced angularly about the axis of such valve. The channels may by spiral and, if so, will usually be formed at an angle of between 10 and 80° to a plane perpendicular to the direction of flow.

In addition, a deflector may be disposed in the fluid flow in front of the control valve and angularly inclined in the direction of fluid flow to gradually deflect fluid flow towards the entrances to the spiral channels. This is to alleviate the formation of eddy currents whereby the pressurised fluid is forced through the smaller apertures of the spiral channels which could disrupt formation of the spiral fluid flow. Usually such a deflecting member comprises a cone.

In addition, where the fluid flow has been compressed through channels in a fluid control valve the fluid control means may comprise an expansion chamber in which the fluid may enter after passing through the fluid control valve to allow expansion of the pressurised fluid after spiral flow is induced. This expansion of the pressurised fluid enables the spiral flow path to be retained but reduces the pressure slightly after having been compressed through the channels in the control valve so that it more readily engages with and enters into the channels formed between the threaded region of the nut and the cylinder placed therein.

This welding apparatus is highly applicable to existing welding apparatus whereby the leading arm of conventional weld heads can be utilised to form a substantially airtight cylinder through which the fluid flow may pass and thus be directed to the component during the weld operation whereby the weld control valve can be simply incorporated within the end of such a member.

The invention will now be described, by way of example only, with reference to the accompanying illustrative drawings as follows:-
Figure 1 is a cross sectional view of a conventional nozzle of an automatic weld head used in drawn arc welding of nuts (Prior Art).
Figure 2 is a cross sectional view of a nozzle of an automated weld head of the present invention with a loaded component;
Figure 3 is a plan view from above of the fluid control valve of the nozzle of Figure 2;
Figure 4 is the nozzle of Figure 2 showing operative connection of a weld nut to a metal sheet;
Figure 5 shows a second embodiment of a nozzle of a weld head of the present invention; and
Figure 6 shows another embodiment of the pin having co-axial grooves.

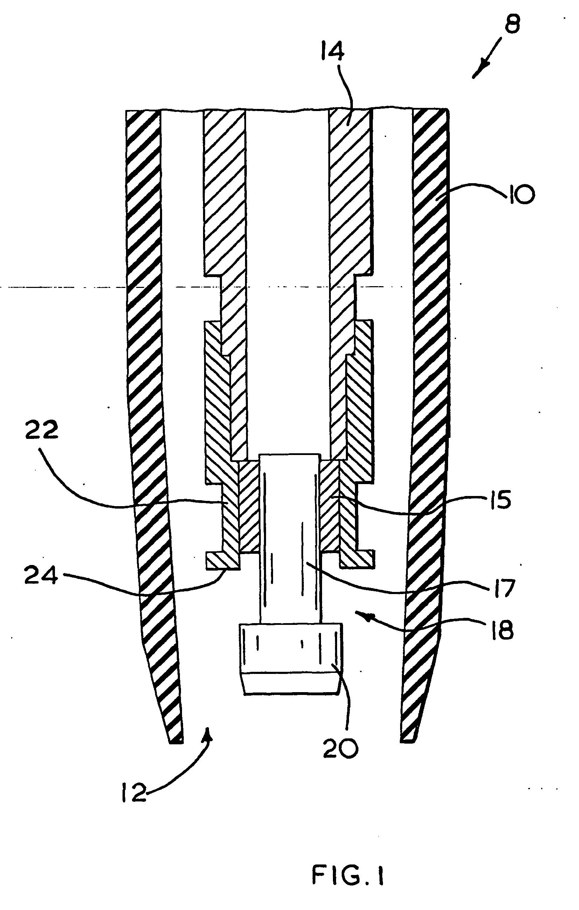

Referring first to Figure 1, there is shown a nozzle arrangement (8) of a conventional automatic weld head used in drawn arc welding. In the view shown in Figure 1, the inner loading arm (14) is shown in a loaded position (relative to a sleeve (10)) although no component is shown. This is for convenience of description of the prior art.

The nozzle (8) comprises a hollow elongate cylindrical sleeve member (10) made of an electrically conductive material such as copper or brass. The sleeve further comprises elongate slots (not shown) extending upwardly from an open outermost end (12), which slots serve to allow radial expansion of the remote end of the sleeve if an internal radial force is applied. Due to the resilient nature of the sleeve, these slots serve to allow the passage of an object having a larger diameter than that of the unstressed sleeve if sufficient force is applied to that object. This will be described in more detail later.

The sleeve member (10) is mounted in electrical contact with a computerised weld control unit (not shown) as is conventional within the art. The weld control unit provides for controlling and application of the appropriate weld current.

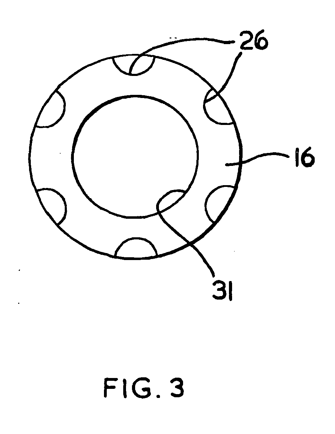

The automatic weld head further comprises a loading arm (14) of substantially insulating material which is displaceable co-axial through the sleeve member (10) (vertically as viewed in Figure 1 and Figure 3). The loading arm is displaceable by conventional servo or electromechanical means which are again conventional within the art and need not be described in more detail. Operation of the drive mechanisms are again computer controlled - albeit that such computer control may be in response to an operation input, such as activation of a switch.

The loading arm (14) is substantially hollow and has mounted on its free end a cylindrical stop nut (15) mounted co-axial therewith. This nut (15) has mounted co-axial therein a ceramic or metal pin (18).

The pin (18) has a head (20) having a diameter substantially greater than that of the body (17) of the pin (18) whereby the head (20) projects externally of the loading arm (14).

The loading arm (14) further comprises an end stop member (22) again mounted co-axial therewith which presents a radially extending end faces (24) for engagement with an appropriate component.

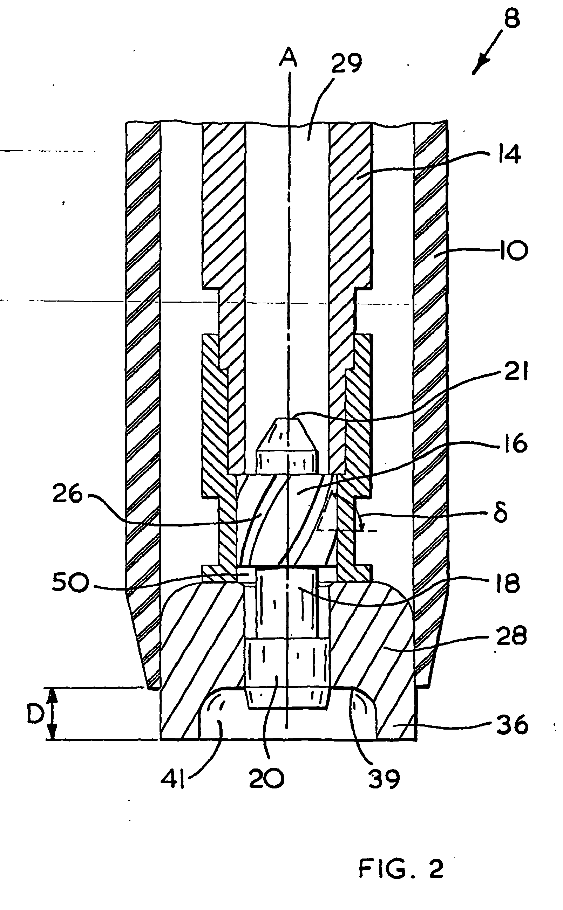

Referring now to Figure 2, the nozzle of the present invention is shown and corresponds substantially to the prior art with two exceptions to be described. Firstly, the design of the nozzle (8) again comprises a hollow elongate cylindrical sleeve member (10) housing a loading arm (14) similar to that described with reference to Figure 1. Furthermore, the nozzle (8) shown in Figure 2 is loaded with a component, in this case a rotary weld nut (28), which has been displaced axially through the outer sleeve (10). Basic loading and operation of the nozzle with this nut (28) will be described later.

The two major differences between the current invention and that of the prior art reside in the replacement of the stop nut (15) of the prior art with a cylindrical fluid control valve (16) again having co-axially mounted therein a pin member (18) wherein the pin (18) also enjoys in modification whereby its inwardly directed end (21) forms a truncated cone as it extends away from the free end (12) of the nozzle (8). The engagement between the valve (16) and the end stop member (22) and the arm (14) forms a substantially airtight fit and whereby engagement of the pin (18) within the valve (16) also forms a substantially airtight fit.

For clarity, whilst the nozzle (8) in Figure 2 is shown in cross section, the valve (16) is shown in profile in order that its external configuration may be clearly seen.

The fluid control valve (16) comprises in its radial outer surface a series of six grooves (26) (which are shown in Figures 2 and 3) equally disposed angularly about the circumference (at 60° relative to each other) and which spiral about this outer surface at an angle (δ) of approximately 60° relative to a plane extending perpendicular to the axis (A) of such valve. These spiralling grooves (26) serve to provide for fluid communication between the hollow central chamber (29) of the loading arm (14) and the exterior thereof. The pin (18) serves to form a relative seal with the interior surface (31) of the cylindrical valve (16).

The loading arm (14) has connected thereto a pressurised fluid source (not shown) which is again controlled by the weld control unit, allowing fluid to be introduced into the loading arm (14) under pressure to be expelled through the fluid control valve along the appropriate spiralling grooves (26).

In operation the automatic weld head is mechanically displaceable by means of motor driven or hydraulically driven means into an engagement with a workpiece such as sheet metal. The weld head itself, in a rest configuration, will hold the loading arm (14) axially removed from the sleeve member (10). In operation a weld nut (28) is fed by means of an automated feeder to an entrance port (not shown) of the nozzle, at which stage the loading arm (14) is displaced so as to engage with the nut (28) whereby the pin head (20) is received within the central threaded aperture of the nut (28) in a substantially friction fit with the inwardly directed threads of such nut and to pass partially through said central aperture to project externally of said nut as the end faces (24) of the end stop (22) engage with an upper surface of said nut (see Figure 2). Continued displacement of the loading arm into the sleeve member (10) effectively forces the nut (28) through said sleeve member (10).

The nut (28), as best seen in Figure 2, varies slightly from a conventional nut in that it has on its lower face (39) a peripheral ridge (36). To improve weld performance this ridge may taper to an annular apex, having a "V" shaped configuration. The pin (18) projects externally of the threaded portion of the nut (28) so as to be partially received within a chamber (41) formed by this ridge (36).

Furthermore, the nut (28) will have a diameter slightly greater than the internal diameter of the sleeve member (10) to provide for frictional engagement between the nut and the sleeve. This serves to retain the nut from simply "falling" through the sleeve (10) as it is pushed through by the loading arm (14). This frictional fit further serves to restrain the nut (28) as the pin of the loading arm (14) is driven therethrough. As discussed above, the sleeve (10) has an array of longitudinally extending slits which permit for expansion of the sleeve (10) as the nut is forced therethrough. This allows for controlled displacement of the nut along the sleeve member (10) under force applied by the loading arm (14).

In operation, the nut is displaced through the sleeve (10) at a predetermined distance so that the outer ridge (36) of the nut projects externally from the sleeve (10) a predetermined distance (D) as best seen in Figure 1.

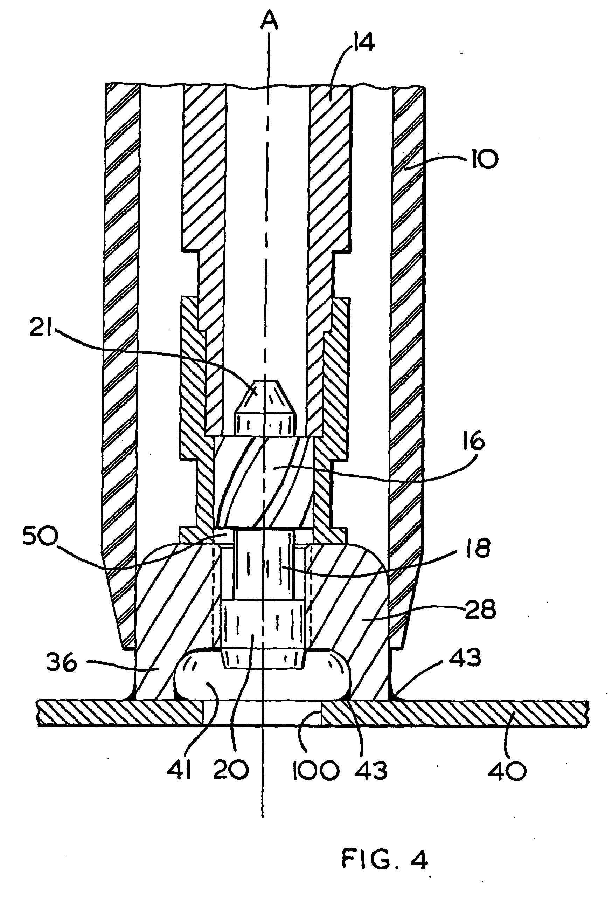

The automated weld head then serves to displace the nozzle (8) towards a metallic work surface (40). The work surface will usually comprise metallic sheet material, for example as used in the bodywork of an automobile. The work surface is maintained in electrical contact with the weld control unit, as is the weld nut (28) by virtue of electrical contact between the sleeve (10) and the weld nut (28). A low voltage is applied by the weld control unit which is able therefore to determine contact between the nut (28) and the work surface (40) since contact effects completion of the appropriate electrical circuit generated by the weld control unit. In this position the weld control unit, as is conventional, determines the exact relative position between the automatic weld head, weld nut and work surface and initialises a conventional weld cycle whereby the automatic weld head withdraws the weld nut away from the work surface and applies a weld current to the sleeve and nut (28) which induces a weld arc to form between the nut and the work surface creating a pool of molten metal to form on the ridge (36) of the weld nut and the work surface (40). Immediately following which, the weld head serves to plunge the nut (28) into the molten metal of the weld pool. As the weld pool solidifies it forms a homogenous joint between the nut and the metallic work surface which is usually stronger than the metallic components of the nut or work surface. The weld head then withdraws the sleeve (10) and loading arm (14) out of engagement with the nut (28), whereby the frictional engagement forces between the sleeve and the nut and the pin (18) and the nut (28) are overcome by the rigid engagement of the nut with the work surface. As seen in Figure 4, the weld pool forms weld joints (43) around the inner and outer periphery of the ridge (36) of the nut (28).

In the welding operation described above, it has been found that this procedure can result in significant splashing of the molten metal due to the intense and rapid melting of the metal and as the nut is driven into engagement therewith. The droplets of molten metal formed by such splashes can land on the internal threads of the nut (28). In addition, due to impurities both in and on the surface of the nut and the work surface, notably carbon, the high temperatures generated by this type of welding procedure can result in the generation of vaporised impurities and burnt particles in the form of a smoke. These- vaporised impurities and smoke may then condense and be deposited on the internal threads of the nut (28). Since the nut is intended to receive a fastening element, which may take the form of a screw or bolt, and may be intended to form an electrical engagement between the nut and any screw threaded fastener fixed thereto, then any impurities formed on the internal thread of the nut could adversely effect electrical contact whereas any molten material as splashed on the threads of the nut could prevent or make screw threaded engagement with a screw threaded fastener difficult. Thus the effects of both these forms of airborne fluid residue from the weld pool are detrimental to the efficiency of the welding process.

This problem has previously been partially addressed by the use of the pin (18) projecting through the central screw threaded portion of the nut to try and prevent splashes from engagement with the screw thread. However, such a feature is only partially successful since the pin head (20) is only capable of engagement with the innermost edges of the screw threads and thus an open channel is able to extend spirally about the pin head by means of the screw thread. This allows any vapourised impurities or smoke to pass over the internal screw threads and also allows any splashes to extend at least partially into the screw threaded region of the weld nut (28).

Therefore, the improved process of the current invention involves an additional process step during the actual arc welding process. Referring to the improved weld nozzle of Figures 2 and 4, as the weld head lifts the nozzle arrangement (8) away from the work surface so as to create the weld arc, the weld control unit activates the pressurised fluid control mechanism (usually of valve or other standard fluid control unit) to introduce pressurised fluid, most usually pressurised air at a pressure of approximately 10-20 litres per square metre, into the hollow central area (29) of the loading arm (14) to thereby pass through the air control valve (16) by means of the spiral grooves (26) into a region (50) (or expansion chamber) between the pin head (20) and the fluid control valve (16) (and sealed by engagement between the nut (28) and stop member (22)) whereby such pressurised air is then forced through the screw threads of the nut about the pin head (20) which creates a positive pressure preventing smoke or vapourised impurities or metallic splashes from entering the screw threaded area of the nut (28).

Furthermore, as seen from Figures 2 and 4, the innermost end (21) of the pin (18) comprises a truncated cone. Formation of this truncated cone serves to deflect the fluid flow inside the loading arm (14) towards the peripheral entrances to the formed spirals (26) of the fluid control valve (16). Reflection of the fluid flow by use of such a conical surface helps alleviate formation of eddy currents that could impair fluid flow into the spirals of the valve (16). Furthermore, in one embodiment of the invention shown in Figures 2 and 4, the fluid flow is allowed to expand once it has passed through the spiral grooves (26) of the fluid control valve (16) in the region (50) between the valve and the head of the pin (18). It has been found that by allowing the pressurised fluid or compressed air to expand in this region it helps to improve the vortex effect created by the spiralled grooves which vortex effect again assists in displacing the pressurised fluid or air to engage the spiral channel formed between the screw thread of the nut (28) and the pin head (20). It also serves to return the pressure of the compressed air to the desired range of 10-20 litres per square meter after the additional compression through the fluid control valve (16). Air under this pressure is more readily received through the threads of the nut.

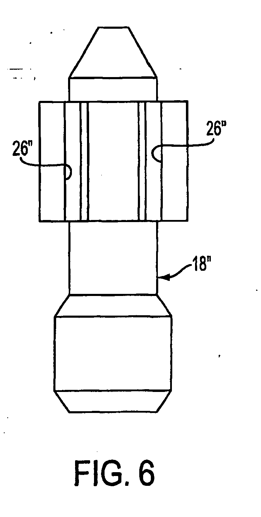

The angle (δ) of the spiral grooves formed in the control valve (16) are set at approximately 60°. However it will be appreciated that this angle (δ) may be varied from 10° right through to 90° (i.e. co-axial), as illustrated in Figure 6, whilst still falling within the scope of the present invention. In fact, experimentation has indicated that co-axial grooves (26") on an alternative embodiment of the pin (18") may work as well or better than spiral grooves in preventing smoke or vaporised impurities or metallic splashes from entering the screw threaded area of the nut.

The use of spirals within the fluid control valve (16) are utilised primarily to create a vortex effect as the pressurised air flow engages with the spiral threads of the nut (28) to allow for effective fluid flow from the valve and through this threaded region of the nut. However, if the angle (δ) increased to 90° then fluid under pressure will still be forced through the valve (16) into engagement with the threads of the nut (28) albeit efficiency may be slightly reduced. It will also be appreciated whilst the valve (16), as shown in Figures 2 and 3, utilise a series of grooves formed about the periphery of the valve (16) such grooves may equally be formed along the inner peripheral wall (31) of this cylindrical valve (16) or alternatively may simply be formed through the solid part of such valve. The critical criterion in this case is to provide for fluid communication between the interior of the arm (14) and the internal threaded region of the nut (28). The valve (16), in its simplest embodiment, may be removed completely.

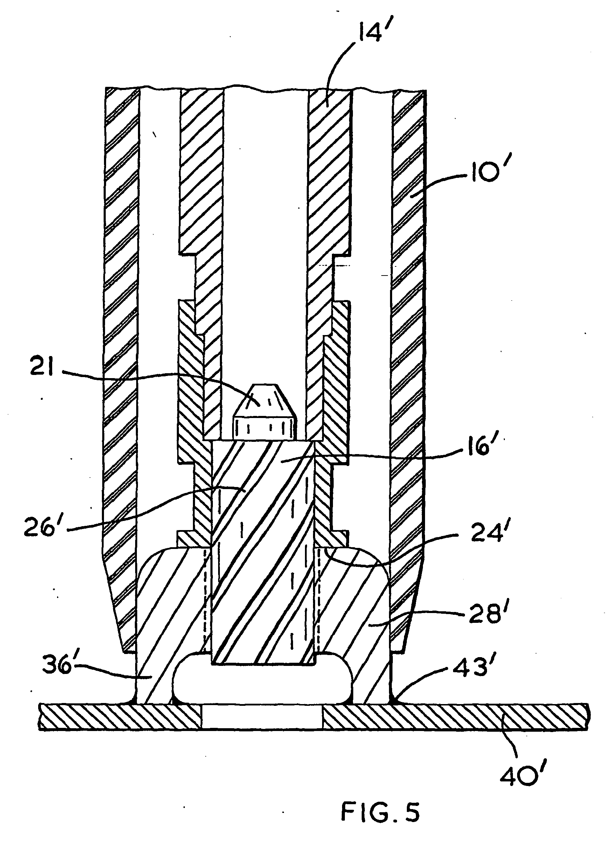

Figure 5 illustrates an alternative embodiment to the current invention. In this embodiment, the fluid control valve (16') is increased in size so as to replace the combined valve (16) and pin arrangement (18) of Figure 2 so that the valve (16') projects externally of the arm (14) so as to pass through and frictionally engage with the internal thread of the nut (28'). In this embodiment the spiral grooves (26') engage directly with the internal threads of the nut to again pass pressurised fluid (compressed air) into the threaded region of said nut to create a positive pressure preventing transmission of vaporised gas and particles or molten metal splashes into the internal thread of the nut. Here again, the efficiency of the valve in the process can be varied by varying the angle of the grooves (26').

It will be appreciated that for utilisation of this invention with regard to a weld nut applied to a sheet metal surface as herein before described, then an aperture (100) is required to be formed through that sheet metal material to allow communication between the chamber (41) and a region having a lower pressure than the pressurised fluid introduced into the arm (14) to effect appropriate pressurised fluid flow. However, it will also be appreciated that the present invention is not limited to a welding process and apparatus for use solely with weld nuts but may also be extended to the welding of other components to a metallic surface. For example, the invention also has benefits within the field of stud welding. Stud welding involves a substantially identical process to that described for the welding of nuts to metallic surface but instead of nuts, the components are studs which comprise a substantially cylindrical threaded body having an enlarged head, usually circular and co-axial with the stud body. In this situation the head itself is welded directly to the metal in a manner identical to that previously described for the nut. When welded to a sheet metal such a stud is intended to receive a nut or other threaded fastener to provide a similar function to the nut previously described. Again the formation of molten metal on this threaded region due to splashing or the formation of impurity on carbon deposits by the formation of smoke and vaporised impurities will again be detrimental to this welding operation. Therefore, this invention is equally applicable to such stud welding by the introduction of a pressurised fluid flow over the threaded portion of the stud so as to force any gases produced by the welding process or molten metal droplets formed by splashing during the welding process (airborne fluid residue) to be forced away from the threaded region by virtue of such controlled pressurised fluid flow. Again compressed air is the most likely source of pressurised fluid. Here the fluid flow is used to form a "barrier" between the threaded region and the weld pool.

In its simplest form the invention could be embodied by the position of a simple tubular delivery valve positioned above the threaded region of a stud so as to direct air vertically downwards along the threaded region of the stud whereby it will engage the rear portion of the head of the stud and be deflected outwards thus providing the appropriate fluid barrier preventing splashes or smoke from travelling towards the threaded region. Alternatively, a series of fine nozzles could be displaced around the weld head to again direct pressurised air jets onto the back of the head of the stud (i.e. the surface of the stud head which is not brought into weld engagement with the weld pool) at such an angle that the pressurised gas is then deflected so as to pass over the surface of the stud head and displaced radially outwardly from the central portion to again effectively form a pressurised fluid barrier between the threaded region and the weld pool whilst meeting the objectives of this invention. In this manner the compressed air is not directed onto the weld joints themselves but merely flows radially away from the threaded central portion of the stud so as to deflect any smoke or molten droplets away from this threaded portion but without directly or adversely affecting the melt pool and weld joints about the periphery of the head of the stud. Obviously more complicated apparatus and methods may be employed to effect the same end result for stud welding.

It will also be appreciated for stud welding that the threaded portion itself need not be metallic but may be of plastics or other material provided that electrical contact can be achieved with a metal head of such a stud.

Furthermore, the fluid flow itself may comprise preheated air (or liquid) to prevent any undue enforced cooling of the melt pool during the weld process.

Whilst the specific embodiment of both the method and apparatus has been directed to use with an automated weld head system, it is equally applicable to a hand held welding gun which operates in a similar manner utilising a computerised weld control unit to control the actual welding operation but in this situation conventional a hand held weld gun would simply require an additional control unit to introduce the pressurised fluid upon operation of the trigger to effect manual welding. A hand held weld gun would require the operator to position the weld nut or weld stud in engagement with a metallic surface (40) and then to activate the weld gun by depressing a trigger. The weld gun will then comprise left means to withdraw the nozzle and nut from the metallic surface a sufficient distance to create the weld arc. Such a situation operation of the trigger switch of the gun would also introduce the appropriate flow of pressurised gas in the manner discussed with reference to the automated system above.

## Claims

1. A method of welding a substantially metal component (28) to a metal workpiece (40), wherein said component (28) comprises a metal weld region (36) and a threaded connector region, comprising the steps of :
holding the metal weld region (36) of the component (28) by a weld head of a welding machine and engaging the threaded connector region of the component (28) with a fluid flow control means (16) of the welding machine;
creating a weld arc between said metal weld region (36) of said component (28) and metal workpiece (40) to create a weld pool of molten material; and
initiating the pressurised fluid flow between the welding machine and the component (28) so as to be disposed between the connector region of the component (28) and the weld pool to deflect any airborne fluid residue of the weld pool away from said threaded connector region of said component (28) during the displacement of the component (28) into the weld pool,
**characterized by** the step of deflecting flow of the pressurised fluid through a channel formed by threads of the threaded connecter region and by the fluid flow control means (16).

2. A method as claimed in claim 1 in which the flow of pressurised fluid is initiated at least substantially simultaneously as the creation of the weld arc.

3. A method as claimed in claim 1 in which the flow of pressurised fluid is initiated before the weld arc is created.

4. A method as claimed in claim 1 in which the component (28) is a weld nut, comprising the step of directing said pressurised fluid flow through a central aperture of said nut (28).

5. A method as claimed in claim 4 comprising the step of placing a solid insert (18) in frictional engagement with internal threads of said nut (28) to form a sealed channel with said threads through which fluid flow is directed.

6. A method as claimed in claim 1 in which a spiral flow path is induced in the pressurised fluid flow.

7. A method as claimed in claim 6 wherein the spiral flow path is induced by passing said fluid through at least one spiral channel (26).

8. A method as claimed in claim 6 further comprising the step of causing the pressurised fluid to expand after the spiral flow path is induced in the fluid flow.

9. A method as claimed in claim 6 in which the fluid flow is passed through six spiral channels (26) equally spaced angularly about a central axis.

10. A method as claimed in claim 7 in which the at least one spiral channel (26) is set to deflect the fluid flow at an angle of between 10° and 80° to a plane perpendicular to the direction of flow.

11. A method as claimed in claim 10 in which the angle of deflection is between 50° and 70°.

12. A method as claimed in claim 1 in which the pressurised fluid is compressed air and is directed at a pressure of between 5 and 30 litres per square metre.

13. A method as claimed in claim 12 in which the compressed air is directed at a pressure of between 10 and 20 litres per square metre.

14. Welding apparatus for welding a substantially metal component (28) to a metal workpiece (40), said component (28) comprising a metal weld region (36) and a threaded connector region, said apparatus comprising a weld head having means for holding said weld region (36) of said component (28) adjacent said workpiece (40) and inducing a weld arc between said weld region (36) and workpiece (40) to create a weld pool of molten material, whereby the weld head subsequently displaces said weld region into said weld pool; said apparatus further comprising a pressurised fluid source and a fluid flow control means (16, 16') for directing said pressurised fluid between said weld head and said component (28) and the weld pool so as to deflect any airborne fluid residue of the weld pool away from said connector region of said component (28), **characterized in that** said fluid flow control means (16) comprises a directing member (18, 20; 16') for engaging with the outer edges of the threads of said threaded connecter region so as to form a substantially sealed thread channel therewith and to direct said fluid flow through said thread channel.

15. Welding apparatus as claimed in claim 14 further comprising control means for initiating fluid flow at least substantially simultaneously with or before the creation of the weld arc.

16. Welding apparatus as claimed in claim 14 for welding a weld nut (28), wherein said fluid flow control means (16, 16') comprises a substantially hollow fluid transmitting member (14) with an end stop (24) for substantially sealed engagement with an upper surface of said nut (28) so as to direct said fluid flow through a central aperture of said nut (28).

17. Welding apparatus as claimed in claim 14 for welding a weld nut (28), wherein the directing member (18; 20; 16') comprises a cylindrical body (20; 16') to be received within the central aperture of said nut (28).

18. Welding apparatus as claimed in claim 16 in which said fluid flow control means comprises a control valve (16, 16') disposed between said fluid source and said nut (28) for inducing a spiral flow path (26; 26') in said fluid flow.

19. Welding apparatus as claimed in claim 18 in which said control valve (16; 16') comprises a solid body having at least one spiral channel (26; 26') extending therethrough.

20. Welding apparatus as claimed in claim 19 wherein the control valve (16; 16') is cylindrical having six spiral channels (26; 26') formed about its periphery so as to be spaced angularly equidistant thereabouts.

21. Welding apparatus as claimed in claim 19 in which the at least one spiral channel (26; 26') is formed at an angle of between 10° and 80° to a plane perpendicular to the to the direction of fluid flow.

22. Welding Apparatus as claimed in claim 18 in which a deflector member (21) is disposed in said fluid flow in front of said control valve (16) and angularly inclined to the direction of fluid flow to gradually deflect fluid flow towards said spiral channel (26).

23. Welding apparatus as claimed in claim 22 in which said deflector member (21) comprises a cone.

24. Welding apparatus as claimed in claim 18 in which said fluid flow control means (16; 16') comprises an expansion chamber (50) into which the fluid enters after passing through said control valve (16; 16'), causing expansion of said pressurised fluid after spiral flow path is induced therein.

25. Welding apparatus as claimed in claim 24 in which said expansion chamber (50) is formed between the control valve (16; 16') and said cylindrical body of the directing member (18).

## Patentansprüche

1. Verfahren zum Anschweißen eines im Wesentlichen metallenen Bauteils (28) an ein metallenes Werkstück (40), wobei das Bauteil (28) einen metallenen Schweißbereich (36) und einen Schraubverbinderbereich aufweist, wobei das Verfahren folgende Schritte umfasst:
Halten des metallenen Schweißbereichs (36) des Bauteils (28) von einem Schweißkopf einer Schweißmaschine und Anlegen einer Fluidstrom-Steuervorrichtung (16) der Schweißmaschine an den Schraubverbinderbereich des Bauteils (28);
Erzeugen eines Schweißlichtbogens zwischen dem metallenen Schweißbereich (36) des Bauteils (28) und dem metallenen Werkstück (40), um ein Schweißbad aus geschmolzenem Material zu bilden; und
Einleiten des Druckfluidstroms zwischen der Schweißmaschine und dem Bauteil (28) derart, dass er zwischen den Verbinderbereich des Bauteils (28) und das Schweißbad gelangt, um etwaige schwebende Fluidrückstände des Schweißbads von dem Schraubverbinderbereich des Bauteils (28) weg zu leiten, während das Bauteil (28) in das Schweißbad getaucht wird,
**dadurch gekennzeichnet, dass** der Druckfluidstrom durch einen durch Gewindegänge des Schraubverbinderbereichs und die Fluidstrom-Steuervorrichtung (16) gebildeten Kanal gelenkt wird.

2. Verfahren nach Anspruch 1, wobei der Druckfluidstrom wenigstens im Wesentlichen gleichzeitig mit der Erzeugung des Schweißlichtbogens eingeleitet wird.

3. Verfahren nach Anspruch 1, wobei der Druckfluidstrom vor der Erzeugung des Schweißlichtbogens eingeleitet wird.

4. Verfahren nach Anspruch 1, wobei das Bauteil (28) eine Schweißmutter ist, wobei der Druckfluidstrom durch eine zentrale Öffnung der Mutter (28) geleitet wird.

5. Verfahren nach Anspruch 4, wobei ein fester Einsatz (18) in Reibeingriff mit Innengewindegängen der Mutter (28) gebracht wird, um mit den Gewindegängen einen abgedichteten Kanal zu bilden, durch den der Fluidstrom geleitet wird.

6. Verfahren nach Anspruch 1, wobei der Druckfluidstrom auf eine spiralförmige Strömungsbahn gebracht wird.

7. Verfahren nach Anspruch 6, wobei die spiralförmige Strömungsbahn **dadurch** erzeugt wird, dass das Fluid durch wenigstens einen spiralförmigen Kanal (26) geleitet wird.

8. Verfahren nach Anspruch 6, wobei außerdem das Druckfluid ausgedehnt wird, nachdem die spiralförmige Strömungsbahn im Fluidstrom erzeugt wurde.

9. Verfahren nach Anspruch 6, wobei der Fluidstrom durch sechs spiralförmige Kanäle (26) geleitet wird, die in gleichen Winkelabständen um eine Mittelachse angeordnet sind.

10. Verfahren nach Anspruch 7, wobei der wenigstens eine spiralförmige Kanal (26) so angeordnet ist, dass er den Fluidstrom unter einem Winkel von 10° bis 80° zu einer senkrecht zur Strömungsrichtung verlaufenden Ebene ablenkt.

11. Verfahren nach Anspruch 10, wobei der Ablenkungswinkel zwischen 50° und 70° beträgt.

12. Verfahren nach Anspruch 1, wobei es sich bei dem Druckfluid um Druckluft handelt, die unter einem Druck zwischen 5 und 30 Liter pro Quadratmeter eingeleitet wird.

13. Verfahren nach Anspruch 12, wobei die Druckluft unter einem Druck zwischen 10 und 20 Liter pro Quadratmeter eingeleitet wird.

14. Schweißgerät zum Anschweißen eines im Wesentlichen metallenen Bauteils (28) an ein metallenes Werkstück (40), wobei das Bauteil (28) einen metallenen Schweißbereich (36) und einen Schraubverbinderbereich aufweist, wobei das Gerät einen Schweißkopf mit Mitteln umfasst, um den Schweißbereich (36) des Bauteils (28) an dem Werkstück (40) in Anlage zu halten und einen Schweißlichtbogen zwischen dem Schweißbereich (36) und dem Werkstück (40) zu erzeugen, um ein Schweißbad aus geschmolzenem Material zu bilden, wobei der Schweißkopf den Schweißbereich anschließend in das Schweißbad taucht; wobei das Gerät außerdem eine Druckfluidquelle und eine Fluidstrom-Steuervorrichtung (16, 16') umfasst, durch die das Druckfluid so zwischen den Schweißkopf und das Bauteil (28) und das Schweißbad geleitet wird, dass etwaige schwebende Fluidrückstände des Schweißbads von dem Verbinderbereich des Bauteils (28) weg geleitet werden, **dadurch gekennzeichnet, dass** die Fluidstrom-Steuervorrichtung (16) ein Führungsglied (18, 20; 16') umfasst, das an den Außenrändern der Gewindegänge des Schraubverbinderbereichs anliegt, um in Verbindung damit einen im Wesentlichen abgedichteten Gewindekanal zu bilden und den Fluidstrom durch den Gewindekanal zu leiten.

15. Schweißgerät nach Anspruch 14, das außerdem eine Steuervorrichtung umfasst, die den Fluidstrom wenigstens im Wesentlichen gleichzeitig mit der oder vor der Erzeugung des Schweißlichtbogens einleitet.

16. Schweißgerät nach Anspruch 14 zum Anschweißen einer Schweißmutter (28), wobei die Fluidstrom-Steuervorrichtung (16, 16') ein im Wesentlichen hohles Fluidübertragungsglied (14) mit einem Endanschlag (24) zur im Wesentlichen dichtenden Anlage an einer Oberfläche der Mutter (28) umfasst, um den Fluidstrom durch eine zentrale Öffnung der Mutter (28) zu leiten.

17. Schweißgerät nach Anspruch 14 zum Anschweißen einer Schweißmutter (28), wobei das Führungsglied (18, 20; 16') einen in der zentralen Öffnung der Mutter (28) aufzunehmenden zylindrischen Körper (20; 16') umfasst.

18. Schweißgerät nach Anspruch 16, wobei die Fluidstrom-Steuervorrichtung ein Steuerventil (16; 16') umfasst, das zwischen der Fluidquelle und der Mutter (28) angeordnet ist, um in dem Fluidstrom eine spiralförmige Strömungsbahn (26; 26') zu erzeugen.

19. Schweißgerät nach Anspruch 18, wobei das Steuerventil (16; 16') einen festen Körper umfasst, durch den sich wenigstens ein spiralförmiger Kanal (26; 26') erstreckt.

20. Schweißgerät nach Anspruch 19, wobei das Steuerventil (16; 16') zylindrisch ist und sechs spiralförmige Kanäle (26; 26') aufweist, die in gleichen Winkelabständen um seinen Umfang angeordnet sind.

21. Schweißgerät nach Anspruch 19, wobei der wenigstens eine spiralförmige Kanal (26; 26') unter einem Winkel von 10° bis 80° zu einer senkrecht zur Fluidströmungsrichtung verlaufenden Ebene ausgebildet ist.

22. Schweißgerät nach Anspruch 18, wobei in dem Fluidstrom vor dem Steuerventil (16) ein Umlenkglied (21 angeordnet und in einem Winkel zur Fluidströmungsrichtung geneigt ist, um den Fluidstrom nach und nach in Richtung auf den spiralförmigen Kanal (26) zu lenken.

23. Schweißgerät nach Anspruch 22, wobei das Umlenkglied (21) einen Kegel aufweist.

24. Schweißgerät nach Anspruch 18, wobei die Fluidstrom-Steuervorrichtung (16; 16') einen Expansionsraum (50) umfasst, in den das Fluid eintritt, nachdem es das Steuerventil (16; 16') durchströmt hat, wodurch das Druckfluid eine Ausdehnung erfährt, nachdem es der spiralförmigen Strömungsbahn gefolgt ist.

25. Schweißgerät nach Anspruch 24, wobei der Expansionsraum (50) zwischen dem Steuerventil (16, 16') und dem zylindrischen Körper des Führungsglieds (18) ausgebildet ist.

## Revendications

1. Procédé de soudage d'un composant sensiblement métallique (28) à une pièce à travailler métallique (40), dans lequel ledit composant (28) comprend une région à souder métallique (36) et une région de raccord fileté, comprenant les étapes consistant à :
tenir la région à souder métallique (36) du composant (28) à l'aide d'une tête de soudage d'une machine de soudage et mettre en prise la région de raccord fileté du composant (28) avec des moyens de régulation d'écoulement de fluide (16) de la machine de soudage ;
créer un arc de soudage entre ladite région à souder métallique (36) dudit composant (28) et la pièce à travailler métallique (40) de manière à créer un bain de soudure de matériau fondu ; et
initier l'écoulement de fluide sous pression entre la machine de soudage et le composant (28) de manière à ce qu'il soit disposé entre la région de raccord du composant (28) et le bain de soudure de façon à dévier tout résidu de fluide présent dans l'air du bain de soudure loin de ladite région de raccord fileté dudit composant (28) au cours du déplacement du composant (28) dans le bain de soudure,
**caractérisé par** l'étape consistant à dévier l'écoulement du fluide sous pression à travers un canal formé par les filets de la région de raccord fileté et par les moyens de régulation d'écoulement de fluide (16).

2. Procédé selon la revendication 1, dans lequel l'écoulement du fluide sous pression est initié au moins sensiblement en même temps que la création de l'arc de soudage.

3. Procédé selon la revendication 1, dans lequel l'écoulement du fluide sous pression est initié avant la création de l'arc de soudage.

4. Procédé selon la revendication 1, dans lequel le composant (28) est un écrou à souder, qui comprend l'étape consistant à diriger ledit écoulement de fluide sous pression à travers une ouverture centrale dudit écrou (28).

5. Procédé selon la revendication 4, qui comprend l'étape consistant à placer un insert plein (18) dans une mise en prise par frottement avec les filets intérieurs dudit écrou (28) de manière à former un canal étanche avec lesdits filets à travers lequel l'écoulement de fluide est dirigé.

6. Procédé selon la revendication 1, dans lequel un chemin d'écoulement en spirale est induit dans l'écoulement de fluide sous pression.

7. Procédé selon la revendication 6, dans lequel le chemin d'écoulement en spirale est induit en faisant passer ledit fluide à travers au moins un canal en spirale (26).

8. Procédé selon la revendication 6, qui comprend en outre l'étape consistant à provoquer la détente du fluide sous pression une fois que le chemin d'écoulement en spirale a été induit dans l'écoulement de fluide.

9. Procédé selon la revendication 6, dans lequel l'écoulement de fluide passe à travers six canaux en spirale (26) espacés de manière régulière angulairement autour d'un axe central.

10. Procédé selon la revendication 7, dans lequel l'au moins un canal en spirale (26) est disposé de manière à dévier l'écoulement de fluide sous un angle compris entre 10° et 80° par rapport à un plan perpendiculaire à la direction de l'écoulement.

11. Procédé selon la revendication 10, dans lequel l'angle de déviation est compris entre 50° et 70°.

12. Procédé selon la revendication 1, dans lequel le fluide sous pression est de l'air comprimé et est dirigé sous une pression comprise entre 5 et 30 litres par mètre carré.

13. Procédé selon la revendication 12, dans lequel l'air comprimé est dirigé sous une pression comprise entre 10 et 20 litres par mètre carré.

14. Appareil de soudage destiné à souder un composant sensiblement métallique (28) à une pièce à travailler métallique (40), ledit composant (28) comprenant une région à souder métallique (36) et une région de raccord fileté, ledit appareil comprenant une tête de soudage qui dispose de moyens destinés à tenir ladite région à souder (36) dudit composant (28) adjacente à ladite pièce à travailler (40) et induisant un arc de soudage entre ladite région à souder (36) et la pièce à travailler (40) de manière à créer un bain de soudure de matériau fondu, la tête de soudage déplaçant par la suite ladite région à souder dans ledit bain de soudure ; ledit appareil comprenant en outre une source de fluide sous pression et des moyens de régulation d'écoulement de fluide (16, 16') destinés à diriger ledit fluide sous pression entre ladite tête de soudage et ledit composant (28) et le bain de soudure de manière à dévier tout résidu de fluide présent dans l'air du bain de soudure loin de ladite région de raccord dudit composant (28), **caractérisé en ce que** lesdits moyens de régulation d'écoulement de fluide (16) comprennent un élément d'orientation (18, 20 ; 16') destiné à venir en prise avec dans les bords extérieurs des filets de ladite région de raccord fileté de manière à former ensemble un canal de filet sensiblement étanche, et à diriger ledit écoulement de fluide à travers ledit canal de filet.

15. Appareil de soudage selon la revendication 14, comprenant en outre des moyens de régulation destinés à initier l'écoulement de fluide au moins sensiblement en même temps que la création de l'arc de soudage, ou avant celle-ci.

16. Appareil de soudage selon la revendication 14, destiné à souder un écrou à souder (28), dans lequel lesdits moyens de régulation d'écoulement de fluide (16, 16') comprennent un élément de transmission de fluide sensiblement creux (14) avec un arrêt d'extrémité (24) pour une mise en prise sensiblement étanche avec une surface supérieure dudit écrou (28) de manière à diriger ledit écoulement de fluide à travers une ouverture centrale dudit écrou (28).

17. Appareil de soudage selon la revendication 14, destiné à souder un écrou à souder (28), dans lequel ledit élément d'orientation (18, 20 ; 16') comprend un corps cylindrique (20 ; 86') destiné à être reçu à l'intérieur de l'ouverture centrale dudit écrou (28).

18. Appareil de soudage selon la revendication 16, dans lequel lesdits moyens de régulation d'écoulement de fluide comprennent une vanne de régulation (16, 16') disposée entre ladite source de fluide et ledit écrou (28), destinée à induire un chemin d'écoulement en spirale (26 ; 26') dans ledit écoulement de fluide.

19. Appareil de soudage selon la revendication 18, dans lequel ladite vanne de régulation (16 ; 16') comprend un corps plein qui dispose au moins d'un canal en spirale (26 ; 26') qui s'étend à travers.

20. Appareil de soudage selon la revendication 19, dans lequel ladite vanne de régulation (16 ; 16') est cylindrique et dispose de six canaux en spirale (26 ; 26') formés autour de sa périphérie de manière à être espacés angulairement de manière régulière autour de ladite périphérie.

21. Appareil de soudage selon la revendication 19, dans lequel l'au moins un canal en spirale (26 ; 26') est formé sous un angle compris entre 10° et 80° par rapport à un plan perpendiculaire à la direction de l'écoulement du fluide.

22. Appareil de soudage selon la revendication 18, dans lequel un élément de déviation (21) est disposé dans ledit écoulement de fluide en face de ladite vanne de régulation (16) et est incliné de manière angulaire par rapport à la direction de l'écoulement du fluide de façon à dévier de manière progressive l'écoulement de fluide vers ledit canal en spirale (26).

23. Appareil de soudage selon la revendication 22, dans lequel ledit élément de déviation (21) comprend un cône.

24. Appareil de soudage selon la revendication 18, dans lequel lesdits moyens de régulation d'écoulement de fluide (16 ; 16') comprennent une chambre de détente (50) dans laquelle le fluide pénètre après être passé à travers ladite vanne de régulation (16 ; 16'), en provoquant la détente dudit fluide sous pression une fois que le chemin d'écoulement en spirale a été induit à l'intérieur.

25. Appareil de soudage selon la revendication 24, dans lequel ladite chambre de détente (50) est formée entre la vanne de régulation (16 ; 16') et ledit corps cylindrique de l'élément d'orientation (18).
